# DEMANDE DE BREVET EUROPEEN

(11) **EP 3 398 919 A1**
(43) Date de publication de la demande: **07.11.2018**
(21) Numéro de dépôt: 18170180.6
(22) Date de dépôt: 30.04.2018
(51) Int. Cl.: C04B 28/14, B28B 1/26

(54) **MOULE DE TUILERIE ET COMPOSITION DE PLÂTRE POUR MOULE**

(30) Priorité: 05.05.2017 FR 1753994
(71) Demandeur: Saint-Gobain Placo, 92150 Suresnes (FR)
(72) Inventeur: FOURDRIN, Emmanuel, 84306 Cavaillon (FR); LASALLE, Audrey, 84306 Cavaillon (FR)
(74) Mandataire: Saint-Gobain Recherche

(57) **Abrégé**

La présente invention concerne une composition minérale pour la préparation de moules, en particulier de moules de tuilerie, de fonderie, ladite composition étant à base de plâtre et comprenant de 0,2 à 5% en masse du plâtre d'un ou de plusieurs carbonates hydrosolubles, le pourcentage en masse étant indiqué par rapport à la masse du plâtre.

La présente invention concerne également le moule réalisé et le procédé d'obtention dudit moule.

## Description

La présente invention concerne le domaine des moules de tuilerie (utilisés notamment pour la fabrication des tuiles) et des compositions utilisées pour la fabrication de ces moules. La présente invention porte notamment sur un nouveau moule de tuilerie, ainsi que sur une nouvelle composition de plâtre pour la fabrication de moules de tuilerie, et sur un procédé de fabrication dudit moule.

Les moules utilisés en tuilerie peuvent être notamment en résine ou en plâtre. Les moules en plâtre sont généralement fabriqués en coulant une composition à base de plâtre entre une forme ou coque ou enveloppe ou un support, au moins en partie métallique, et une empreinte (ou mère de moule) présentant la forme de la tuile à produire, le moule obtenu étant prêt à l'emploi après durcissement ou prise du plâtre et séparation de l'empreinte. Lors de la fabrication des tuiles, la composition ou pâte, par exemple à base d'argile, utilisée pour former les tuiles, est moulée à la forme souhaitée dans ledit moule, puis généralement mise à sécher pendant plusieurs heures, le cas échéant dans une étuve, avant d'être cuite à plus haute température.

Les moules à tuiles ou moules de tuilerie doivent notamment présenter une bonne dureté en surface pour éviter la formation de défauts sur les produits moulés, de même qu'une bonne résistance à l'abrasion. Ils doivent également présenter une résistance mécanique suffisante pour supporter la pression exercée pendant le moulage, ainsi qu'une bonne capacité à drainer l'eau extraite de la pâte utilisée pour former la tuile pendant le pressage. Cependant l'obtention d'une bonne résistance, en particulier à l'abrasion, déterminante pour obtenir des moules présentant une bonne durée de vie, se fait généralement au détriment de la capacité du plâtre à drainer l'eau contenue dans le matériau moulé pendant le pressage.

La présente invention a par conséquent cherché une solution simple à mettre en oeuvre, économique et efficace pour obtenir des moules de tuilerie présentant des propriétés améliorées, ces moules présentant une résistance et durabilité suffisantes mais aussi une bonne capacité à drainer l'eau contenue dans les matériaux moulés pendant le pressage, sans que les améliorations apportées se fassent au détriment d'autres propriétés recherchées dans ce domaine telles que l'ouvrabilité du matériau utilisé pour obtenir le moule (ou capacité à être travaillé pendant au moins un laps de temps), avec une vitesse de prise satisfaisante du matériau lors de la réalisation du moule et une facilité de mise en oeuvre du matériau.

Ce but a été atteint grâce à la composition selon la présente invention et grâce aux moules fabriqués à partir de cette composition, la présente invention ayant notamment mis en évidence que l'ajout d'un additif particulier, choisi parmi les carbonates solubles dans l'eau, dans une composition de plâtre pour obtenir les moules, était la solution pour obtenir des moules présentant les caractéristiques précitées.

La composition mise au point selon l'invention est une composition adaptée à la fabrication, et utilisée pour la réalisation, de moules de tuilerie, ladite composition (pour (la fabrication de) moules de tuilerie) étant à base de plâtre et comprenant de 0,2 à 5% en masse du plâtre d'un ou de plusieurs carbonates hydrosolubles (ou carbonates solubles dans l'eau), le pourcentage en masse étant indiqué par rapport à (ou étant rapporté à) la masse du plâtre (le terme "poids" pouvant également être utilisé pour désigner la "masse" par la suite et selon l'usage courant).

Par carbonate, on entend tout composé présentant un groupement CO₃, quel que soit son degré d'hydrogénation. De préférence, le carbonate se présente sous forme solide à température ambiante.

Par carbonates hydrosolubles, c'est-à-dire carbonates solubles dans l'eau, on entend plus particulièrement les carbonates présentant une solubilité S dans l'eau supérieure ou égale à 10 g/l pour au moins l'une des températures suivantes : 15°C, 20°C ou 25°C, de préférence supérieure ou égale à 60 g/l, en particulier supérieure ou égale à 90 g/l, voire supérieure ou égale à 100 g/l, voire de façon particulièrement préférée supérieure ou égale à 200 g/l pour au moins l'une des températures précitées, ces valeurs de solubilité étant déterminées à une température de 15, 20 ou 25°C et correspondant à la quantité maximale en grammes du carbonate considéré dissous dans un litre d'eau saturée dans les conditions de température précitées et sous une pression de 1 atm.

De préférence, le ou les carbonates hydrosolubles utilisés sont choisis parmi les carbonates suivants : carbonate de potassium (K₂CO₃, de solubilité de l'ordre de 1110 g/l à 20 ou 25 °C), carbonate de sodium (Na₂CO₃, de solubilité de l'ordre de 300 g/l à 25°C), carbonate d'ammonium ((NH₄)₂CO₃ de solubilité de l'ordre de 1000 g/l à 15 ou 20°C), carbonate de rubidium (Rb₂CO₃, de solubilité de l'ordre de 2230 g/l à 20°C), carbonate de césium (Cs₂CO₃, de solubilité de l'ordre de 2610 g/l à 15°C), carbonate de lithium (Li₂CO₃ de solubilité de l'ordre de 13,4 g/l à 20°C) ou parmi les mélanges de deux ou plusieurs de ces carbonates, le taux total de carbonate(s) hydrosoluble(s) utilisé(s) dans la composition étant de 0,2 à 5% en masse du plâtre, ce taux étant la somme des taux de tous les carbonates hydrosolubles présents quand il y a plusieurs carbonates hydrosolubles présents.

De façon particulièrement préférée, le ou les carbonates hydrosolubles utilisés sont choisis parmi les carbonates suivants : carbonate de potassium, carbonate de sodium, carbonate d'ammonium, et leurs mélanges.

Selon un mode de réalisation avantageux, un seul carbonate hydrosoluble est présent dans la composition, notamment et de façon préférée le carbonate de sodium.

La présente invention a également pour objet l'utilisation de la composition précitée selon l'invention pour la fabrication de moules de tuilerie, ainsi que le moule de tuilerie obtenu à partir de cette composition, ledit moule étant ainsi formé (initialement ou à partir) d'une composition à base de plâtre comprenant de 0,2 à 5% en masse (par rapport au plâtre) d'un ou de plusieurs carbonates hydrosolubles.

Par "moule formé d'une composition", on entend dans la présente invention un moule formé initialement, ou formé à partir, d'une composition, les composants de la composition pouvant dans le moule final avoir réagi et/ou se trouver sous une forme différente (par exemple le plâtre s'étant solidifié sous sa forme réhydratée ou les carbonates s'étant au moins en partie solubilisés).

La présente invention a également pour objet un procédé de fabrication d'un moule de tuilerie, dans lequel :
- une composition à base de plâtre comprenant de 0,2 à 5% en masse (par rapport au plâtre) d'un ou de plusieurs carbonates hydrosolubles, est gâchée (ou délayée ou mélangée) avec de l'eau de manière à obtenir un mélange (ou "composition gâchée"), en particulier fluide,
- ledit mélange est coulé (ou versé ou transféré) entre un support (ou une forme ou coque ou enveloppe), en particulier au moins en partie métallique, et une empreinte (ou mère de moule) présentant la forme de la tuile à produire (généralement au moins l'une des parties (support ou empreinte) est en métal et l'autre est en métal ou en résine),
- ledit mélange, après sa prise, en particulier après au moins une prise suffisante, est séparé (au moins) de l'empreinte afin de former le moule de tuilerie.

Par "mélange fluide" ou "composition gâchée fluide", on entend que le mélange ou la composition gâchée présente une valeur d'étalement supérieure à 10 cm, de préférence supérieure ou égale à 13 cm, notamment supérieure ou égale à 15 cm. Cette valeur d'étalement (ou cette fluidité) est déterminée à l'aide d'un anneau Schmidt de 60 mm de diamètre intérieur et de 50 mm de hauteur, selon la norme NF B 12-401. Selon cette méthode de détermination, l'anneau est mis sur un plan de travail, l'intérieur de l'anneau formant ainsi une cavité, et cette cavité est complètement remplie de la pâte à tester prélevée à la sortie d'un malaxeur, puis l'anneau une fois rempli est soulevé verticalement, la pâte s'étalant alors sur le plan de travail, le diamètre du disque formé par la pâte, ou diamètre d'étalement ou valeur d'étalement, étant alors déterminé. La composition gâchée est coulée lorsqu'elle est ainsi suffisamment fluide et non encore prise.

Par "prise suffisante", on entend que le mélange présente une telle prise suffisante lorsqu'il atteint ou présente une valeur de dureté Shore A (selon la norme ISO 868) au moins égale à 30, et de préférence présente une dureté Shore A supérieure, en particulier supérieure ou égale à 35, notamment supérieure ou égale à 40.

La présente invention permet d'obtenir de façon simple, économique et efficace, des moules, en particulier de tuilerie, présentant une bonne résistance et durabilité en même temps qu'une bonne porosité et une perméabilité particulièrement améliorée entrainant une capacité au drainage également améliorée, sans que ces améliorations se fassent au détriment d'autres propriétés telles que la facilité de mise en oeuvre ou la vitesse de prise lors de la réalisation du moule, comme illustré ultérieurement.

La composition mise au point selon l'invention pour la fabrication de moules de tuilerie (ou de moules à tuiles), est une composition dite minérale car elle est essentiellement (à au moins 80%, et préférentiellement à au moins 90%, voire 95%), voire uniquement, à base de composants inorganiques (ou minéraux).

Cette composition est à base de (ou (majoritairement) formée de ou à partir de) plâtre, le plâtre étant son composant majoritaire, représentant notamment de 70 à 99%, voire de 80 à 99% en masse de la composition totale en sec (ou de la composition sous sa forme pulvérulente (forme sous laquelle la composition est préparée, conditionnée et prête à gâcher)). Les pourcentages des autres composants, présents ou ajoutés (par exemple l'eau lors du gâchage) le cas échéant sont indiqués par la suite, par défaut et sauf indication contraire, par rapport à la masse du plâtre utilisée pour réaliser la composition.

Le plâtre est communément fabriqué à partir de sulfate de calcium di-hydraté (ou gypse), d'origine naturelle ou synthétique. Ce sulfate de calcium, sous forme de poudre, subit généralement une cuisson, ou calcination, qui le déshydrate principalement en sulfate de calcium semi-hydraté ou en sulfate de calcium anhydre ou en un mélange de ces deux formes, donnant ainsi le produit appelé plâtre, qui peut ensuite être moulé, façonné sous diverses formes en mélangeant ce plâtre avec de l'eau pour obtenir une gâchée qui se solidifie en reformant du sulfate de calcium di-hydraté. Le type de cuisson a une influence sur la forme finale des grains de plâtre et permet d'obtenir deux types de plâtre qui sont généralement distingués : les plâtres de type Alpha et les plâtres de type Béta. Les plâtres de types Béta sont généralement formés de cristaux de plâtre dont la surface est irrégulière, issus du broyage du plâtre obtenu par cuisson du gypse dans des fours en particulier rotatifs sous pression atmosphérique. Les plâtres de types Alpha sont généralement formés de cristaux, ou grains, de plâtre dont la surface est plus régulière, ces grains étant issus du broyage du plâtre obtenu par cuisson du gypse sous pression, en milieu humide, en particulier en autoclave. Si ces deux formes de plâtres ont la même formule chimique, leurs formes extérieures différentes influent sur le taux de gâchage et sur les propriétés obtenues, le plâtre Béta étant habituellement privilégié pour obtenir une bonne porosité comparativement au plâtre Alpha.

Cependant, selon la présente invention, le plâtre utilisé dans la composition pour moules comprend de préférence moins de 45% en poids, avantageusement moins de 40%, en particulier moins de 30%, et notamment moins de 25% de plâtre Béta, voire est dénué de plâtre de type Béta. De préférence, le plâtre de (ou formant) ladite composition pour moules comprend plus de 55%, avantageusement plus de 60%, en particulier plus de 70%, et notamment plus de 75% de plâtre Alpha, voire est uniquement formé de plâtre de type Alpha.

En combinaison avec le plâtre (composant a)) formant l'ingrédient majoritaire de la composition, l'additif sélectionné selon l'invention (composant b)) est quant à lui exclusivement choisi parmi les carbonates hydrosolubles, et mélangé, au taux tel que sélectionné dans la présente invention, pour obtenir une composition permettant d'obtenir des moules de tuilerie présentant à la fois une résistance et durabilité suffisantes mais aussi une capacité au drainage améliorée résultant à la fois d'une bonne porosité et d'une perméabilité particulièrement, et de façon surprenante, améliorée, et ce tout en garantissant une bonne facilité de mise en oeuvre de la composition et maintenant une vitesse de prise particulièrement satisfaisante lors de la réalisation du moule, comme indiqué précédemment.

Le taux du ou des carbonates hydrosolubles (ce taux étant la somme des taux de tous les carbonates hydrosolubles présents quand il y a plusieurs carbonates hydrosolubles présents), tel(s) qu'ajouté(s) au plâtre/ mis dans la composition selon l'invention, est de 0,2 à 5% en masse par rapport à la masse du plâtre, et est de préférence inférieur à 4,9%, en particulier inférieur à 4,5%, notamment inférieur à 4,0%, voire inférieur à 3,0%, notamment inférieur ou égal à 2,0%, et est de préférence supérieur ou égal à 0,25%, en particulier supérieur ou égal à 0,30% en masse par rapport à la masse du plâtre.

De façon surprenante, les moules ainsi obtenus sont plus aptes à évacuer l'eau des matériaux moulés (tuiles) pendant le pressage, cette capacité n'étant par exemple pas obtenue avec d'autres types d'additifs, par exemple avec d'autres additifs utilisés potentiellement comme porogènes (aptes à créer de la porosité) tels que le chlorure de sodium ou le chlorure de magnésium, ou avec d'autres carbonates (non solubles dans l'eau selon l'invention) tels que le carbonate de magnésium (MgCO₃, de solubilité inférieure à 1,8 g/l à 20°C). La composition selon l'invention est généralement dénuée de ces autres types d'additifs, en particulier dénuée de chlorure de sodium ou de chlorure de magnésium, et dénuée des autres carbonates (non solubles dans l'eau selon l'invention) tel que le carbonate de magnésium.

De façon préférée, la composition est également dénuée de composants aptes à libérer des ions phosphates en solution aqueuse, ces composants dans la présente composition pouvant notamment ralentir de façon pénalisante la vitesse de prise de la composition.

Avantageusement également, la composition est préférentiellement dénuée de saccharide(s), qu'il s'agisse de monosaccharide(s) ou de polysaccharide(s) (tels que des disaccharides, des trisaccharides, des gommes naturelles de type gomme arabique, etc.), pour de meilleures viscosité et durabilité particulièrement appropriées pour la fabrication des moules de tuilerie (pour lesquels la composition est notamment spécifiquement conçue).

En outre, la composition selon l'invention est avantageusement dénuée de ciment(s), c'est-à-dire dénuée de liant(s) hydraulique(s) - autre(s) que le plâtre - de type ciment(s) (tel que le ciment Portland, ou tout autre ciment selon la norme NF EN 197.1 ou la norme NF EN14647, en particulier ciment de haut fourneau, ciment pouzzolanique, ciment au laitier, ciment alumineux, etc.), le(s)dit(s) ciment(s) pouvant le cas échéant nuire à la porosité et perméabilités recherchées pour les moules de tuilerie selon la présente invention, la composition ainsi réalisée étant particulièrement adaptée à la fabrication desdits moules de tuilerie.

Outre le plâtre et l'additif précité, la composition selon la présente invention peut également comprendre le cas échéant, une ou des charges minérales (par exemple pour augmenter la résistance mécanique), à des taux pouvant aller jusqu'à 32 % en masse de la composition totale en sec (ou de la composition sous sa forme pulvérulente), et étant généralement inférieur à 30%, voire à 15% en masse de la composition totale en sec. Ces charges sont choisies en particulier dans le groupe formé par les billes de verre, expansées ou non, les paillettes de verre, les fibres minérales, et la vermiculite.

La composition peut également renfermer d'autres additifs, à des taux n'excédant pas 15% en masse par rapport à la masse de plâtre, et en particulier inférieurs à 10%, voire à 5% en masse, tels que des retardateurs de prise, des accélérateurs de prise, des agents fluidifiants, des agents épaississants, des agents mouillants, des agents hydrofuges tels que des silicones ou des cires, des agents limitant l'expansion pendant la prise, des inhibiteurs de déformation, des agents anti-mousse, des agents anti-décantation, des agents moussants, des stabilisateur de mousse, des bactéricides, des fongicides, des agents d'ajustement du pH ou des agents colorants. De préférence le pH de la composition est compris entre 6 et 10.

Le pourcentage de chaque composant présent autre que le plâtre (dont l'additif selon l'invention) dans la composition pulvérulente n'excède généralement pas 5% en masse de la composition totale en sec.

Les particules de la composition telles que les particules de plâtre présentent préférentiellement une taille inférieure à 500 µm. On appelle taille d'une particule son diamètre équivalent, c'est-à-dire le diamètre de la sphère qui se comporterait de manière identique lors de l'analyse granulométrique des particules (ou de la poudre formée desdites particules), la distribution granulométrique (ensemble des tailles de particules) étant mesurée en particulier par granulométrie laser.

Les moules selon l'invention sont réalisés à partir de la composition selon l'invention en procédant notamment comme indiqué dans le procédé selon l'invention, la réalisation des moules s'opérant généralement à température ambiante, en particulier à une température (ambiante) de l'ordre de 10 à 30°C. Les composants, notamment le plâtre, sont progressivement introduits puis mélangés avec l'eau de façon à obtenir un mélange homogène, la température étant maintenue approximativement constante pendant l'introduction. Puis le mélange est coulé entre un support, en particulier au moins en partie métallique, et une empreinte présentant la forme de la tuile à produire. Une fois le mélange suffisamment pris, le moule est généralement retiré de l'empreinte (ou l'empreinte est retirée du moule), et reste généralement sur sa partie support ayant servi à la réalisation du moule. Le moule de tuilerie ainsi formé est ensuite laissé au repos entre 1h et 6h avant utilisation pour atteindre une dureté appropriée pour son utilisation, le moule pouvant alors être utilisé pour fabriquer les tuiles ou étant le cas échéant maintenu humide jusqu'à utilisation.

Le gâchage (mélange de la composition pulvérulente avec de l'eau) est effectué de façon à avoir un rapport pondéral eau/matières sèches préférentiellement inférieur à 0,50 (en d'autres termes le pourcentage d'eau ajoutée n'excède pas 50% de la masse de la composition pulvérulente), en particulier inférieur à 0,40, notamment inférieur à 0,35, ce rapport étant en outre supérieur à 0,20, voire supérieur à 0,25, notamment supérieur ou égal à 0,26.

Le temps d'ouvrabilité (temps pendant lequel le mélange peut être travaillé) du mélange est inférieur au temps initial de prise, lequel n'excède généralement pas 30 min, voire est inférieur ou égal à 20 min, voire même est inférieur ou égal à 15 min. Le temps initial de prise ou temps de début de prise est le temps nécessaire pour qu'un sillon tracé par une lame de couteau dans le mélange étalé ne se referme plus. Le temps final de prise (ou temps de prise suffisante) lorsque le mélange atteint une valeur de dureté Shore A égale à 40 est généralement inférieur à 25 min, l'intervalle entre le temps initial de prise et ledit temps final de prise étant généralement compris entre 3 et 9 min.

La porosité du moule obtenu (volume des pores présents dans le moule) est avantageusement comprise entre 8 et 30% en volume, en particulier entre 10 et 30% en volume. Cette porosité est par exemple évaluée par porosimétrie à mercure réalisée sur un appareil de référence Autopore IV 9500 commercialisé par la société Micromeritics. La taille (ou diamètre équivalent) des pores du moule obtenu est en outre généralement supérieure à 2,5 µm, en particulier de l'ordre de 3 à 6 µm, cette taille dépassant celle des pores des moules habituellement réalisés, le moule selon l'invention permettant ainsi d'obtenir avantageusement une telle taille de pores élevée pour la porosité précitée .

L'aptitude du moule à drainer l'eau, ou à se laisser traverser par l'eau, est en outre avantageusement supérieure à 170 g par 10 minutes, en particulier supérieure à 200 g par 10 minutes, notamment supérieure à 500, voire supérieure à 800 g par 10 minutes. Cette aptitude est déterminée en mesurant la quantité d'eau évacuée au bout de 10 minutes au travers d'un échantillon de 15 cm de diamètre et de 1,5 cm d'épaisseur placé entre deux joints d'étanchéité et à une pression de 1 bar.

La présente invention et ses avantages seront mieux compris à la lecture des exemples qui suivent, donnés à titre illustratif et non limitatif.

On prépare sept compositions selon l'invention (compositions A1, A2, A3, A4, A5, A6 et A7) et sept compositions comparatives hors de l'invention (compositions B, C, D1 et D2, E, F et G) en mélangeant pour chacune des compositions 1300 g de plâtre (tel que spécifié dans le tableau 1 suivant) avec un ou plusieurs agents ou additifs comme indiqué dans le tableau 1 suivant (les pourcentages indiqués étant les pourcentages en masse par rapport au poids de plâtre).

**Tableau 1**

| | Plâtre | fluidifiant Melment F15G*** | Retardan P**** | Additif supplémentaire |
|---|---|---|---|---|
| A1 | Alpha | 0,4% (5,20 g) | | 0,3% Na₂CO₃ (3,90 g) |
| A2 | Alpha | 0,5% (6,50 g) | | 0,5% Na₂CO₃ (6,50 g) |
| A3 | Alpha | 0,7% (9,10 g) | | 2% Na₂CO₃ (26,0 g) |
| A4 | Alpha | 0,4% (5,20 g) | | 0,3% Na₂CO₃ (3,90 g) +0,3 % K₂CO₃ (3,90 g) |
| A5 | Alpha | 0,4% (5,20 g) | | 0,9% (NH₄)₂CO₃ (3,90g) |
| A6 | Alpha | 0,4% (5,20 g) | | 0,7% Li₂CO₃ (9,06 g) |
| A7 | Alpha | 1% (13,0 g) | | 0,6% Na₂CO₃ (7,80 g) |
| B(*) | Alpha | 0,2% (2,60 g) | | 0,1 % Na₂CO₃ (1,30 g) |
| C(*) | Alpha | 0,3% (3,90 g) | | Aucun |
| D1(*) | Teha G** | | 0,08% (0,01 g) | |
| D2(*) | Teha G** | | | |
| E(*) | Alpha | 0,4% (5,20 g) | | 0,8% MgCO₃ (10,3 g) |
| F(*) | Alpha | 0,4% (5,20 g) | | 0,55% NaCl (7,18 g) |
| G(*) | Alpha | 0,4% (5,20 g) | | 0,9% MgCl₂ (11,7 g) |

| | | | | |
|---|---|---|---|---|
| *(*) hors invention* **Plâtre commercialisé par la société Saint-Gobain Formula sous la référence Teha G pour la fabrication de moules pour le pressage des tuiles *** agent fluidifiant de la famille des mélamines commercialisé sous la référence Melment F15G par la société BASF. **** agent retardateur de prise commercialisé sous la référence Retardan P par la société Sika. | | | | |

Le plâtre alpha utilisé présente des particules de taille inférieure à 300 microns.

On gâche chacune de ces compositions avec une quantité d'eau telle que le rapport massique eau/plâtre est égal à 0,30, à l'exception de la composition A7 pour laquelle le rapport massique eau/plâtre est égal à 0,26. On coule les compositions fluides obtenues dans des moules de formes appropriées pour obtenir les éprouvettes servant à la caractérisation des échantillons.

Pour chacune des compositions réalisées, on évalue :
- la valeur d'étalement ("test A") à l'aide d'un anneau Schmidt de 60 mm de diamètre intérieur et de 50 mm de hauteur, selon la norme NF B 12-401, cette valeur devant être supérieure à 10 cm, de préférence supérieure ou égale à 13 cm;
- le temps initial de prise (IST), c'est-à-dire le temps nécessaire pour qu'un sillon tracé par une lame de couteau dans l'échantillon étalé après le test A ne se referme plus;
- le temps final de prise (FST) lorsque le mélange atteint une valeur de dureté Shore A égale à 40;
- l'aptitude à drainer l'eau (test B) en mesurant la quantité d'eau évacuée au bout de 10 minutes au travers d'un échantillon de 15 cm de diamètre et de 1,5 cm d'épaisseur du mélange durci placé entre deux joints d'étanchéité et à une pression de 1 bar;
- le volume poreux et la taille de pores, par porosimétrie à mercure réalisée sur un appareil de référence Autopore IV 9500 commercialisé par la société Micromeritics;
- la dureté Brinell, mesurée à 1481 N avec une bille de 8 mm de diamètre sur une presse Shimadzu AGSX) sur des éprouvettes de dimensions 4 x 4x 16 cm maintenues humides.

Le tableau 2 ci-après montre les résultats de ces caractérisations pour les compositions selon l'invention et les compositions comparatives du tableau 1.

**Tableau 2**

| | Test A (mm) | IST (min: s) | FST (min:s) | test B (g/10 min) | volume poreux (% | taille de pores (µm) | dureté Brinell (kg/mm²) |
|---|---|---|---|---|---|---|---|
| A1 | 225 | 16:00 | 22:45 | 816 | 21 | 4,0 | 9,3 |
| A2 | 220 | 13:45 | 19:30 | 1384 | 26 | 5,8 | 9,4 |
| A3 | 130 | 11:00 | 18:15 | 2122 | 25 | 5,8 | ND |
| A4 | 175 | 14:15 | 19:00 | 1553 | 25 | 5,7 | ND |
| A5 | 180 | 22:00 | 29:00 | 673 | 25 | 4,1 | ND |
| A6 | 185 | 16 :00 | 25:00 | 239 | 24 | 3,0 | ND |
| A7 | 195 | 11:00 | 14:00 | 227 | ND | ND | 12,8 |
| B(*) | 175 | 19:15 | 28:15 | 139 | 23 | 2,0 | 10,1 |
| C(*) | 190 | 16:00 | 27:30 | 57 | 25 | 1,8 | 10,4 |
| D1(*) | 220 | 15:00 | 21:00 | 145 | 24 | 2,2 | 11,2 |
| D2(*) | 220 | 12:15 | 17:30 | 100 | ND | ND | ND |
| E(*) | 220 | 31:00 | 45:00 | 72 | 23 | 1,9 | 10 |
| F(*) | 230 | 13:00 | 20:00 | 156 | 25 | 2,4 | 10,4 |
| G(*) | 140 | 06:00 | ND | 5 | 23 | 0,9 | 10,4 |

| | | | | | | | |
|---|---|---|---|---|---|---|---|
| ND = non déterminé | | | | | | | |

On constate que les compositions selon l'invention permettent notamment d'augmenter significativement la capacité de l'échantillon à évacuer l'eau, cette amélioration se traduisant notamment par une valeur particulièrement améliorée au test B, tout en gardant un bon volume poreux et tout en gardant notamment une bonne résistance mécanique, cette amélioration de la capacité de l'échantillon à évacuer l'eau pouvant être importante (échantillon A6 ou A7) à extrêmement importante (échantillons A1 à A5) et pouvant également le cas échéant s'accompagner d'une amélioration de la résistance mécanique (échantillon A7). La valeur d'étalement au test A (fluidité) ainsi qu'un temps initial de prise suffisant traduisent également une bonne aptitude des compositions à être coulées, de même que le temps final de prise traduit une capacité au démoulage rapide permettant une productivité optimale. On observe également une augmentation de la taille des pores pour les échantillons selon l'invention, cette taille dépassant significativement celle des pores des échantillons comparatifs.

On constate que les autres additifs des exemples comparatifs ou un taux insuffisant d'additif selon l'invention ne permettent pas de produire le même effet, en particulier d'améliorer la capacité au drainage.

La composition selon l'invention est, notamment, conçue (spécifiquement) pour et destinée à être utilisée avec avantages pour réaliser des moules de tuilerie.

## Revendications

1. Composition pour moules de tuilerie, ladite composition étant à base de plâtre et comprenant de 0,2 à 5% en masse du plâtre d'un ou de plusieurs carbonates hydrosolubles.

2. Composition selon la revendication 1, **caractérisée en ce que** le ou lesdits carbonates hydrosolubles sont un ou des carbonates présentant une solubilité dans l'eau supérieure ou égale à 10 g/l pour au moins l'une des températures suivantes : 15°C, 20°C ou 25°C, de préférence supérieure ou égale à 60 g/l, en particulier supérieure ou égale à 90 g/l, voire supérieure ou égale à 100 g/l, voire de façon particulièrement préférée supérieure ou égale à 200 g/l.

3. Composition selon l'une des revendications 1 ou 2, **caractérisée en ce que** le plâtre de ladite composition comprend moins de 45% en poids, avantageusement moins de 40%, en particulier moins de 30%, et notamment moins de 25% de plâtre Béta.

4. Composition selon l'une des revendications 1 à 3, **caractérisée en ce que** le taux de carbonate(s) hydrosoluble(s) est inférieur à 4,9% en masse par rapport à la masse du plâtre, en particulier inférieur à 4,5%, notamment inférieur à 4,0%, voire inférieur à 3,0%, notamment inférieur ou égal à 2,0%, et est supérieur ou égal à 0,25%, en particulier supérieur ou égal à 0,30%.

5. Composition selon l'une des revendications 1 à 4, **caractérisée en ce que** le ou lesdits carbonates hydrosolubles sont choisis parmi le carbonate de potassium, le carbonate de sodium, le carbonate d'ammonium, le carbonate de rubidium, le carbonate de césium, le carbonate de lithium, ou parmi les mélanges de deux ou plusieurs de ces carbonates.

6. Composition selon l'une des revendications 1 à 5, **caractérisée en ce qu'**elle est dénuée de chlorure de sodium ou de chlorure de magnésium, et **en ce qu'**elle est dénuée de carbonates non solubles dans l'eau tel que le carbonate de magnésium.

7. Composition selon l'une des revendications 1 à 6, **caractérisée en ce qu'**elle est dénuée de composants aptes à libérer des ions phosphates en solution aqueuse.

8. Composition selon l'une des revendications 1 à 7, **caractérisée en ce qu'**elle est dénuée de saccharide(s).

9. Composition selon l'une des revendications 1 à 8, **caractérisée en ce qu'**elle est dénuée de ciment(s).

10. Composition selon l'une des revendications 1 à 9, **caractérisée en ce qu'**elle comprend également une ou des charges minérales, à des taux pouvant aller jusqu'à 32 % en masse de la composition totale en sec.

11. Utilisation de la composition selon l'une des revendications 1 à 10 pour la fabrication de moules de tuilerie.

12. Moule de tuilerie, formé d'une composition à base de plâtre comprenant de 0,2 à 5% en masse d'un ou de plusieurs carbonates hydrosolubles, le pourcentage en masse étant indiqué par rapport à la masse du plâtre.

13. Moule de tuilerie selon la revendication 12, **caractérisée en ce qu'**il présente une porosité comprise entre 8 et 30% en volume, en particulier entre 10 et 30% en volume, et **en ce que** la taille de ses pores est avantageusement supérieure à 2,5 µm, en particulier de l'ordre de 3 à 6 µm.

14. Procédé de fabrication d'un moule de tuilerie, dans lequel :
- une composition à base de plâtre comprenant de 0,2 à 5% en masse d'un ou de plusieurs carbonates hydrosolubles, le pourcentage en masse étant indiqué par rapport à la masse du plâtre, est gâchée avec de l'eau de manière à obtenir un mélange,
- ledit mélange est coulé entre un support et une empreinte présentant la forme de la tuile à produire,
- ledit mélange, après sa prise, en particulier après au moins une prise suffisante, est séparé de l'empreinte afin de former le moule de tuilerie.

15. Procédé selon la revendication 14, **caractérisé en ce que** la fabrication du moule est opérée à température ambiante.

16. Procédé selon l'une des revendications 14 ou 15, **caractérisé en ce que** ladite composition est gâchée avec de l'eau de façon à avoir un rapport pondéral eau/matières sèches inférieur à 0,50, en particulier inférieur à 0,40, notamment inférieur à 0,35, ce rapport étant en outre supérieur à 0,20, en particulier supérieur à 0,25, notamment supérieur ou égal à 0,26.
